# EUROPÄISCHE PATENTSCHRIFT

(11) **EP 2 606 304 B1**
(45) Veröffentlichungstag und Bekanntmachung des Hinweises auf die Patenterteilung: **02.09.2015**
(21) Anmeldenummer: 11770074.0
(22) Anmeldetag: 29.09.2011
(51) Int. Cl.: F27B 3/08, F27B 3/16, F27B 3/18, F27D 1/18, C21C 5/52

(54) **HUB- UND SCHWENKVORRICHTUNG FÜR EINEN DECKEL EINES OFENS SOWIE OFENANLAGE UND VERFAHREN ZUM CHARGIEREN UND ZUR WARTUNG EINER SOLCHEN OFENANLAGE**
LIFT AND PIVOT DEVICE FOR A COVER OF A FURNACE AND FURNACE SYSTEM AND METHOD FOR CHARGING AND SERVICING SUCH A FURNACE SYSTEM
DISPOSITIF DE LEVAGE ET DE PIVOTEMENT POUR UN COUVERCLE D'UN FOUR AINSI QU'INSTALLATION DE FOUR ET PROCÉDÉ POUR CHARGER ET POUR ENTRETENIR UNE TELLE INSTALLATION DE FOUR

(30) Priorität: 30.09.2010 DE 102010041692
(43) Veröffentlichungstag der Anmeldung: 26.06.2013
(73) Patentinhaber: Primetals Technologies Germany GmbH, 91052 Erlangen (DE)
(72) Erfinder: HEINEMANN, Carlo, 77656 Offenburg (DE); SCHMID, Michael, 77776 Bad Rippoldsau-Schapbach (DE); WILHELM, Uwe, 77731 Willstätt-Legelshurst (DE)
(74) Vertreter: Metals@Linz
(86) Internationale Anmeldenummer: PCT/EP2011/066960
(87) Internationale Veröffentlichungsnummer: WO 2012/041947

(56) Entgegenhaltungen:
- EP-A1- 0 209 735
- EP-A1- 0 291 497
- WO-A1-2009/109335
- AT-B- 393 731
- DE-A1- 10 332 866
- US-A- 4 423 515

## Beschreibung

Die Erfindung betrifft eine Hub- und Schwenkvorrichtung für einen Deckel eines Ofens, insbesondere Lichtbogenofens, sowie eine damit ausgestattete Ofenanlage, insbesondere Lichtbogenofenanlage. Die Erfindung betrifft weiterhin ein Verfahren zum Chargieren und zur Wartung einer solchen Ofenanlage.

Um einen Ofen, insbesondere Lichtbogenofen, zu chargieren, wobei als Einsatzstoff vorwiegend Schrott chargiert wird, wird ein üblicherweise während des Einschmelzprozesses geschlossenes Ofengefäß des Lichtbogenofens geöffnet. Dazu werden vorhandene Elektrodentragarme mit daran befestigten Elektroden sowie der Deckel des Ofens angehoben und mit einer Drehbewegung zur Seite geschwenkt. Üblicherweise geschieht dies durch Rotation dieser Baugruppen um einen gemeinsamen Drehpunkt. Der Einsatzstoff wird nun in das Ofengefäß eingebracht, die Baugruppen in die ursprüngliche Position zurückgeschwenkt und wieder abgesenkt, so dass das Ofengefäß wieder geschlossen ist und der nächste Einschmelzprozess gestartet werden kann.

Hub- und Schwenkvorrichtungen der eingangs genannten Art sind unter anderem aus der DE 35 14 293 A1 bereits bekannt. Hier ist beschrieben, dass die Vorrichtung ein heb- und senkbares Tragglied umfasst, das am Deckelrand angreift. Eine Hubvorrichtung ist auf einem neben dem Ofengefäß angeordneten, seitlich verschwenkbaren Rahmen befestigt. In der abgesenkten Position ist das Tragglied vom Deckelrand gelöst. Es greift beim Anheben in eine der Form des Traggliedes angepasste Hebeöse am Rand des Deckels ein.

Die EP 0 077 319 A1 beschreibt einen Elektroofen mit einem, einen Ofendeckel betätigenden Hubwerk. Das Hubwerk weist einen ortsfesten Stützzapfen und eine innerhalb des Stützzapfens angeordnete Hubeinrichtung auf, welche eine Hubsäule betätigt, die mit dem Ofendeckel in und außer Eingriff zu bringen ist. Die Hubsäule ist am Stützzapfen mittels eines oberen und eines unteren Lagers axial verschiebbar geführt. Die Hubeinrichtung, insbesondere in Form eines Hydraulikzylinders, ist einerseits gelenkig mit der Hubsäule und andererseits gelenkig mit einem ortsfesten Teil der Anlage, wie einem Fundament oder dem Stützzapfen, verbunden.

Mittels einer solchen Hub- und Schwenkvorrichtung werden üblicherweise große Massen bewegt, wobei hohe Axial- und Vertikalkräfte auf die Rotations- und Führungslager der Hub- und Schwenkvorrichtung entstehen. Dies führt zu einer starken Materialbeanspruchung und macht wiederkehrende Wartungsarbeiten und strenge Kontrollen erforderlich. So dürfen für ein einwandfreies Heben und Senken des Deckels die Führungslager bestimmte Toleranzen nicht überschreiten, um ein Klemmen oder Verkeilen der Führung und/oder der eingesetzten Hubzylinder zu vermeiden. Andere ähnliche Hub- und Schwenkvorrichtungen für den Deckel eines Ofens sind aus US-A 4 423 515 und EP-A 0 209 735 bekannt. Es ist Aufgabe der Erfindung, eine besonders wartungsarme Hub- und Schwenkvorrichtung und eine damit ausgestattete Ofenanlage anzugeben. Weiterhin ist es Aufgabe der Erfindung, ein geeignetes Verfahren zum Chargieren und zum Warten einer solchen Ofenanlage anzugeben.

Die Aufgabe wird für die Hub- und Schwenkvorrichtung für einen Deckel eines Ofens, insbesondere Lichtbogenofens, gelöst, indem diese folgendes umfasst:
- ein Führungsgehäuse mit einer Grundplatte, mindestens einer drehbar gelagerten Gleitrolle und einer senkrechten Öffnung,
- einen innerhalb der senkrechten Öffnung im Führungsgehäuse heb- und senkbaren Hebezapfen,
- einen Hubzylinder zum Heben und Senken des Hebezapfens, der einerseits gelenkig mit dem Hebezapfen und andererseits gelenkig und drehbar mit der Grundplatte verbunden ist, und
- ein Führungsgerüst zum Tragen des Deckels, welches einen Stützarm aufweist, wobei ein oberes Ende des Stützarms zur Verbindung mit dem Deckel eingerichtet ist und weiterhin eine Hebenase umfassend eine Hebeöse aufweist, die in Eingriff mit einem, dem Hubzylinder abgewandten Ende des Hebezapfens bringbar ist, wobei der Stützarm an seinem anderen Ende mindestens eine Gleitplatte aufweist, wobei eine Mantelfläche der mindestens einen Gleitrolle beim Heben und Senken des Hubzylinders auf der mindestens einen Gleitplatte abrollbar ist.

Aufgrund der gelenkigen Lagerung des Hubzylinders werden Zwängungen im Zylinder zuverlässig vermieden. Nachdem der Hubzylinder nicht Bestandteil des Hebezapfens ist, kann der Hubzylinder bei einem Defekt schnell und kostengünstig ersetzt werden. Die mindestens eine Gleitrolle minimiert die Reibung zwischen Führungsgerüst und Führungsgehäuse, so dass ein Verschleiß im Kontaktbereich zwischen Führungsgerüst und Führungsgehäuse vermindert ist. Die erfindungsgemäße Hub- und Schwenkvorrichtung ist dadurch besonders schnell zu warten und die Wartungszyklen sind besonders lang ausdehnbar. Durch eine Anordnung der mindestens einen Gleitrolle am Führungsgehäuse werden die daran angreifenden Kräfte minimiert und es ist eine weniger massive und damit kostengünstige Ausführung des Führungsgehäuses realisierbar. Weiterhin ist die mindestens eine Gleitrolle in dieser Anordnung vor Verschmutzung und Erwärmung besonders gut geschützt.

Die Aufgabe wird für eine Ofenanlage, insbesondere Lichtbogenofenanlage, gelöst, indem diese einen Ofen mit einem Ofengefäß und einem Deckel für das Ofengefäß, sowie eine mit dem Deckel verbundene erfindungsgemäße Hub- und Schwenkvorrichtung umfasst, wobei der Deckel am oberen Ende des Führungsgerüsts gegenüber der Hebenase am Stützarm befestigt ist und das Führungsgehäuse um eine vertikale Rotationsachse gegenüber dem Ofengefäß verschwenkbar angeordnet ist.

Nachdem die erfindungsgemäße Hub- und Schwenkvorrichtung besonders schnell zu warten ist und die Wartungszyklen besonders lang ausdehnbar sind, ergibt sich in Folge, dass eine erhöhte Verfügbarkeit einer mit der Hub- und Schwenkvorrichtung ausgestatteten Ofenanlage vorliegt, was sich günstig auf die Leistung und die Betriebskosten der Ofenanlage auswirkt.

Besonders bevorzugt ist es, wenn die mindestens eine Gleitrolle mit einem automatischen Schmiermittelversorgungssystem verbunden ist. Aufgrund der Anordnung der mindestens einen Gleitrolle am Führungsgehäuse kann eine zentrale Schmiermittelversorgung zur automatischen Schmierung der mindestens einen Gleitrolle eingesetzt werden. Dadurch wird der Wartungsaufwand weiter verringert.

Es hat sich bewährt, wenn die Gleitplatten austauschbar ausgeführt sind, beispielsweise an das Führungsgerüst schraubbar oder klemmbar sind. Dies ermöglicht eine einfache Wartung des Führungsgerüsts und weiterhin einen Einsatz unterschiedlich dicker Gleitplatten sowie den Einsatz von Unterlegblechen zwischen Führungsgerüst und Gleitplatte, um die Positionierung des Stützarms des Führungsgerüsts zu beeinflussen und/oder an den Zustand der Gleitrollen anzupassen.

Insbesondere hat es sich für die erfindungsgemäße Hub- und Schwenkvorrichtung weiterhin bewährt, wenn eine längenveränderliche Dichtungseinrichtung einerseits am Führungsgehäuse und andererseits an dem, der Hebenase zugewandten Ende des Hebezapfens befestigt ist, die beim Heben und Senken des Hubzylinders den in Richtung der Hebenase aus dem Führungsgerüst gehobenen Teil des Hebezapfens radial umgibt. Die längenveränderliche Dichtungseinrichtung ist dabei bevorzugt durch eine schlauchförmige Faltenbalgdichtung gebildet.

Durch die Dichtungseinrichtung wird zuverlässig verhindert, dass Staub, Funken oder korrosive Medien in die senkrechte Öffnung im Führungsgehäuse bzw. den Zwischenraum zwischen Hebezapfen und Führungsgehäuse gelangen, was gegebenenfalls zu einem Blockieren oder Klemmen des Hebezapfens innerhalb der senkrechten Öffnung des Führungsgehäuses führen kann. Der Wartungsaufwand für die Hub- und Schwenkvorrichtung wird dadurch enorm verringert.

Es hat sich für die erfindungsgemäße Hub- und Schwenkvorrichtung zudem bewährt, wenn die mindestens eine Gleitrolle um eine Gleitrollendrehachse drehbar ist, deren Position gegenüber dem Führungsgehäuse verschiebbar ist. Dadurch kann eine Längsachse des Stützarms des Führungsgerüsts schnell und problemlos senkrecht ausgerichtet werden.

Bei einer Abnutzung der mindestens einen Gleitrolle und/oder Gleitplatte nach einer bestimmten Betriebszeit der Hub- und Schwenkvorrichtung ändert sich die Lage der Längsachse des Stützarmes, wobei die Längsachse nicht mehr senkrecht ausgerichtet ist, sondern einen Winkel zur Senkrechten bildet. Das führt bei einer Ofenanlage dazu, dass eine Fehlstellung des Deckels gegenüber dem Ofengefäß auftritt. Der Deckel ist nicht mehr exakt horizontal ausgerichtet, sondern in einem Winkel zur Horizontalen, so dass im schlimmsten Fall beim Schwenken des bereits abgehobenen Deckels eine unerwünschte Kollision mit dem Ofengefäß auftritt. Dies kann zu einer Beschädigung des Deckels und/oder des Ofengefäßes und/oder der Hub- und Schwenkvorrichtung führen.

Eine Verstellbarkeit der Position der Gleitrollendrehachse(n) ermöglicht es, einer Abnutzung der Gleitrolle(n) und/oder Gleitplatte(n) entgegen zu wirken, so dass eine Kollision zwischen Deckel und Ofengefäß über einen langen Zeitraum vermieden werden kann, ohne dass Komponenten der Hub- und Schwenkvorrichtung ausgetauscht oder ersetzt werden müssten.

In einer besonders bevorzugten Ausführungsform der Hub- und Schwenkvorrichtung weist das Führungsgehäuse zwei Gleitrollen und das Führungsgerüst zwei Gleitplatten auf, wobei je eine Gleitrolle auf je einer Gleitplatte abrollbar ist. Dadurch wird die Krafteinleitung in das Führungsgehäuse vergleichmäßigt.

Dabei ist es besonders bevorzugt, wenn die Gleitrollendrehachsen in einer horizontalen Ebene liegen und V-förmig zueinander ausgerichtet sind, wobei eine Spitze des V, welche einem virtuellen Schnittpunkt der Gleitrollendrehachsen entspricht, vom Führungsgerüst weg zeigt. Die beiden Ebenen, in denen die Oberflächen der Gleitplatten jeweils liegen, sind in diesem Fall ebenfalls V-förmig zueinander ausgerichtet, wobei eine weitere Spitze des weiteren V, welche einer virtuellen Schnittlinie der Ebenen entspricht, zum Führungsgehäuse zeigt. Der Vorteil dieser Anordnung besteht darin, dass die Gleitrollen die Führung und Zentrierung des Führungsgerüsts übernehmen. Separate Einrichtungen zur positionsgenauen Ausrichtung des Führungsgerüsts gegenüber dem Führungsgehäuse können entfallen.

In einer bevorzugten Ausführungsform der Hub- und Schwenkvorrichtung ist das dem Hubzylinder abgewandte Ende des Hebezapfens sich verjüngend, insbesondere konisch oder halbkugelförmig, ausgebildet. Das Führungsgerüst wird dadurch schwimmend gelagert. Dadurch werden die Maßtoleranzen erhöht, die die Hebeöse aufweisen darf. Ein Verkeilen der Hub- und Schwenkvorrichtung wird zuverlässig vermieden.

Es hat sich bewährt, wenn eine Zentriereinrichtung zur Positionierung des Führungsgerüsts gegenüber dem Führungsgehäuse bei angehobenem Hebezapfen vorhanden ist. Die Zentriereinrichtung dient als eine Art Notsicherung, um den Deckel des Ofens in angehobener Stellung zu sichern. Dies kann beispielsweise erforderlich sein, wenn ein Schrottkorb, mit welchem das Ofengefäß beladen wird, mit dem angehobenen, ausgeschwenkten Deckel des Ofens kollidiert oder der Deckel im angehobenen, ausgeschwenkten Zustand versehentlich von einem Kran angehoben wird. Besonders bewährt hat sich hierbei eine Ausführungsform der Zentriereinrichtung, die einen am Führungsgehäuse angeordneten Führungszapfen und eine am Führungsgerüst angeordnete Aufnahmeanordnung umfassend eine Zentrieröffnung zur Aufnahme des Zentrierzapfens umfasst.

Weiterhin kann bei der Hub- und Schwenkvorrichtung vorgesehen sein, insbesondere sofern diese an einem Lichtbogenofen eingesetzt wird, dass mindestens ein gegenüber dem Führungsgehäuse heb- und senkbarer Elektrodentragarm mit dem Führungsgehäuse verbunden ist. Zum Heben und Senken des mindestens einen Elektrodentragarms wird üblicherweise mindestens ein weiterer Hubzylinder eingesetzt.

Die Aufgabe wird für das Verfahren zum Chargieren einer erfindungsgemäßen Ofenanlage, insbesondere Lichtbogenofenanlage, mit folgenden Schritten gelöst:
- Heben des Hebezapfens mittels des Hubzylinders, wobei der Hebezapfen an seinem dem Hubzylinder abgewandten Ende in die Hebeöse eingreift, das Führungsgerüst samt Deckel angehoben wird und die mindestens eine Gleitplatte auf der mindestens einen Gleitrolle nach oben bewegt wird,
- Verschwenken des Führungsgehäuses inklusive des Führungsgerüsts und des Deckels um die vertikale Rotationsachse von einer Betriebsposition, in der das Ofengefäß mit dem Deckel verschlossen ist, in eine Chargierposition, in der der Deckel das Ofengefäß freigibt,
- Chargieren des Ofengefäßes mit einzuschmelzendem Einsatzstoff, insbesondere Schrott,
- Verschwenken des Führungsgehäuses inklusive des Führungsgerüsts und des Deckels um die vertikale Rotationsachse von der Chargierposition zurück in die Betriebsposition und
- Absenken des Hebezapfens mittels des Hubzylinders, wobei das Führungsgerüst samt Deckel abgesenkt wird und die mindestens eine Gleitplatte auf der mindestens einen Gleitrolle nach unten bewegt wird.

Das Verfahren ist besonders verschleißfrei und damit über lange Zeiträume ohne eine erforderliche zeitintensive Wartung durchführbar.

Die Aufgabe wird für das Verfahren zum Warten einer erfindungsgemäßem Ofenanlage, insbesondere Lichtbogenofenanlage, mit folgenden Schritten gelöst:
- Senken des Hebezapfens mittels des Hubzylinders in einer Betriebsposition, in der das Ofengefäß mit dem Deckel verschlossen ist, wobei der Hebezapfen an seinem dem Hubzylinder abgewandten Ende aus der Hebeöse heraus gleitet und die mindestens eine Gleitplatte auf der mindestens einen Gleitrolle nach unten bewegt wird,
- Verschwenken des Führungsgehäuses um die vertikale Rotationsachse von der Betriebsposition in eine Wartungsposition, wobei der Deckel auf dem Ofengefäß verbleibt,
- Warten der Hub- und Schwenkvorrichtung und/oder eines anderen Teils der Ofenanlage, und
- Verschwenken des Führungsgehäuses um die vertikale Rotationsachse von der Wartungsposition zurück in die Betriebsposition.

Das Verfahren ermöglicht eine schnelle und kostengünstige Wartung der Hub- und Schwenkvorrichtung und/oder eines anderen Teils der Ofenanlage.

Bei beiden erfindungsgemäßen Verfahren hat es sich bewährt, wenn vor dem Verschwenken des Führungsgerüsts um die vertikale Rotationsachse von der Betriebsposition in die Chargierposition oder Wartungsposition, sofern vorhanden, der mindestens eine Elektrodentragarm gegenüber dem Führungsgehäuse und dem Deckel angehoben wird und nach Verschwenken des Führungsgehäuses um die vertikale Rotationsachse von der Chargierposition oder Wartungsposition zurück in die Betriebsposition der mindestens eine Elektrodentragarm gegenüber dem Führungsgehäuse und dem Deckel abgesenkt wird.

Die Figuren 1 bis 19 zeigen beispielhaft eine mögliche Hub- und Schwenkvorrichtung und eine damit ausgestattete mögliche Ofenanlage. Die Figuren verdeutlichen weiterhin die Verfahren zum Chargieren und Warten der beispielhaft gezeigten Ofenanlage. So zeigt
- FIG 1: eine Hub- und Schwenkvorrichtung in der Seitenansicht im Längsschnitt;
- FIG 2 und 3: zeigen dreidimensionale Ansichten des Führungsgerüsts;
- FIG 4: eine 3-dimensionale Darstellung des Führungsgehäuses und des Hebezapfens;
- FIG 5 und 6: 3-dimensionale Darstellungen des Führungsgehäuses und des Hebezapfens im Längsschnitt;
- FIG 7: die Hub- und Schwenkvorrichtung gemäß FIG 1 in der Seitenansicht;
- FIG 8 und 9: die Hub- und Schwenkvorrichtung gemäß FIG 7 im Längsschnitt;
- FIG 10: eine weitere Seitenansicht der Hub- und Schwenkvorrichtung gemäß FIG 1;
- FIG 11: die Hub- und Schwenkvorrichtung gemäß FIG 10 in einer weiteren Seitenansicht im Längsschnitt;
- FIG 12: den Schnitt XII-XII gemäß FIG 10;
- FIG 13: den Schnitt XIII-XIII gemäß FIG 10;
- FIG 14: den Schnitt XIV-XIV gemäß FIG 10;
- FIG 15: eine Draufsicht auf eine Ofenanlage in einer Betriebsposition;
- FIG 16: eine Draufsicht auf die Ofenanlage gemäß FIG 15 in einer Chargierposition;
- FIG 17: eine Draufsicht auf die Ofenanlage in der Betriebsposition gemäß FIG 15;
- FIG 18: eine Draufsicht auf die Ofenanlage in einer Wartungsposition; und
- FIG 19: eine Seitenansicht einer Ofenanlage.

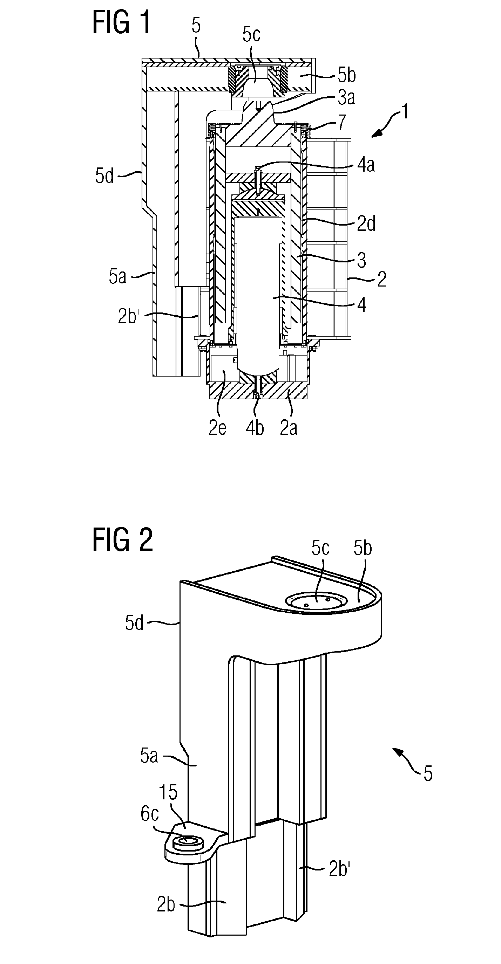

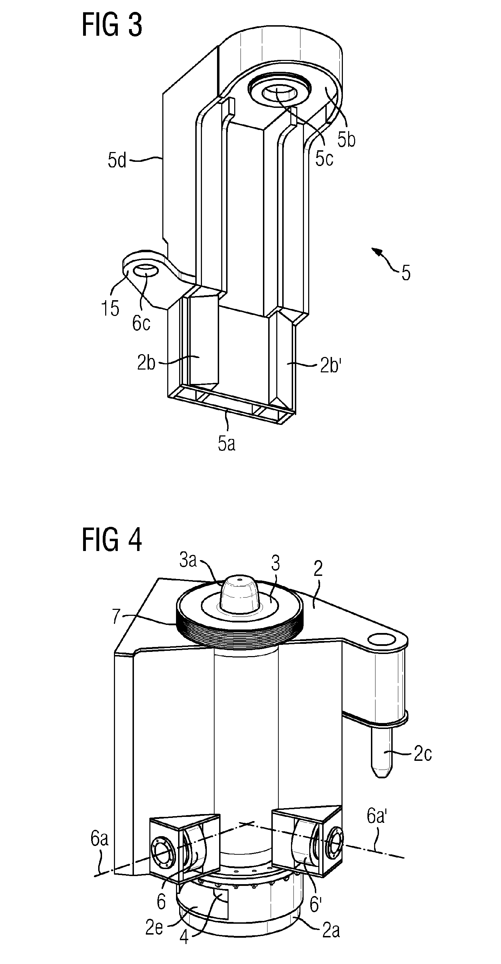

FIG 1 zeigt eine Hub- und Schwenkvorrichtung 1 in der Seitenansicht und im Schnitt, wobei ein Führungsgehäuse 2 umfassend eine Grundplatte 2a, zwei hier nicht sichtbare drehbar gelagerte Gleitrollen 6, 6' (siehe FIG 4) und eine senkrechte Öffnung 2d vorhanden ist. Weiterhin ist ein heb- und senkbarer Hebezapfen 3 vorhanden, der durch die senkrechte Öffnung 2d im Führungsgehäuse 2 geführt ist. Der Hebezapfen 3 ist durch einen Hubzylinder 4 anhebbar und absenkbar. Der Hubzylinder ist einerseits gelenkig mit dem Hebezapfen 3 über ein Gelenk 4a gelenkig verbunden und andererseits mit der Grundplatte 2a gelenkig und drehbar über ein Drehgelenk 4b mit dem Führungsgehäuse 2 verbunden.

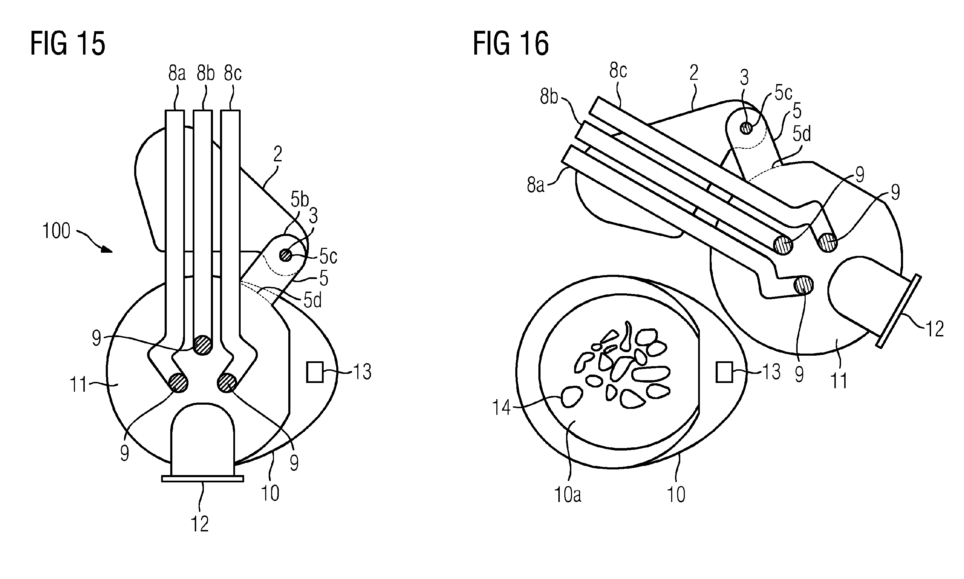

Ein Zugang zum Hubzylinder 4 ist über einen Wartungsschacht 2e im Führungsgehäuse 2 möglich. Die Hub- und Schwenkvorrichtung 1 umfasst weiterhin ein Führungsgerüst 5 zum Tragen eines hier nicht dargestellten Deckels 11 eines Ofens (siehe auch Figuren 15 bis 19), welches einen Stützarm 5a aufweist. An einem oberen Ende des Stützarms 5a befindet sich ein Bereich 5d, der zur Verbindung mit dem Deckel 11 eingerichtet ist und weiterhin eine Hebenase 5b umfassend eine Hebeöse 5c aufweist.

Die Hebeöse 5c ist in Eingriff mit einem, dem Hubzylinder 4 abgewandten, sich verjüngenden Ende 3a des Hebezapfen 3 bringbar. Aufgrund der sich verjüngenden Ausgestaltung des Endes 3a des Hebezapfens 3 sind die Toleranzen der Hebeöse 5c vergrößert und somit ist ein Auswechseln der Hebeöse 5c erst nach sehr langen Zeiträumen erforderlich. Der Stützarm 5a weist im Bereich seines anderen Endes zwei Gleitplatten 2b, 2b' (siehe FIG 2) auf. Die Mantelflächen der Gleitrollen 6, 6' sind beim Heben und Senken des Hubzylinders 4 auf den beiden Gleitplatten 2b, 2b' abrollbar.

Weiterhin ist eine längenveränderliche Dichtungseinrichtung 7 vorhanden, welche einerseits am Führungsgehäuse 2 und andererseits an dem der Hebenase 5d zugewandten Ende des Hebezapfens 3 befestigt ist. Beim Heben und Senken des Hubzylinders 4 wird der Hebezapfen 3 in Richtung der Hebenase 5a oder von dieser weg bewegt, wobei die Dichtungseinrichtung 7 den aus dem Führungsgerüst 5 gehobenen Teil des Hebezapfens 3 permanent radial umgibt. Bei der Dichtungseinrichtung 7 handelt es sich hier um eine schlauchförmige Faltenbalgdichtung, welche das Eindringen von Verunreinigungen zwischen Führungsgehäuse 2 und Hebezapfen 3 verhindert.

FIG 2 und FIG 3 zeigen eine dreidimensionale Ansichten des Führungsgerüsts 5. Gleiche Bezugszeichen wie in FIG 1 kennzeichnen gleiche Elemente. In dieser Darstellung sind die V-förmig zueinander ausgerichteten Gleitplatten 2b, 2b' eindeutig erkennbar. Weiterhin ist eine Aufnahmeanordnung 15 mit einer Zentrieröffnung 6c erkennbar, die Teil einer Zentriereinrichtung ist, zu der weiterhin ein Zentrierzapfen 2c zugehörig ist (siehe FIG 4).

FIG 4 zeigt eine 3-dimensionale Darstellung des Führungsgehäuses 2 und des Hebezapfens 3 gemäß FIG 1 sowie die Gleitrollen 6, 6' mit V-förmig zueinander angeordneten Gleitrollendrehachsen 6a, 6a'. Gleiche Bezugszeichen wie in FIG 1 kennzeichnen gleiche Elemente. Hier ist auch der Wartungsschacht 2e im Detail erkennbar, über welchen der Hubzylinder 4 im Führungsgehäuse 2 zugänglich gemacht wird.

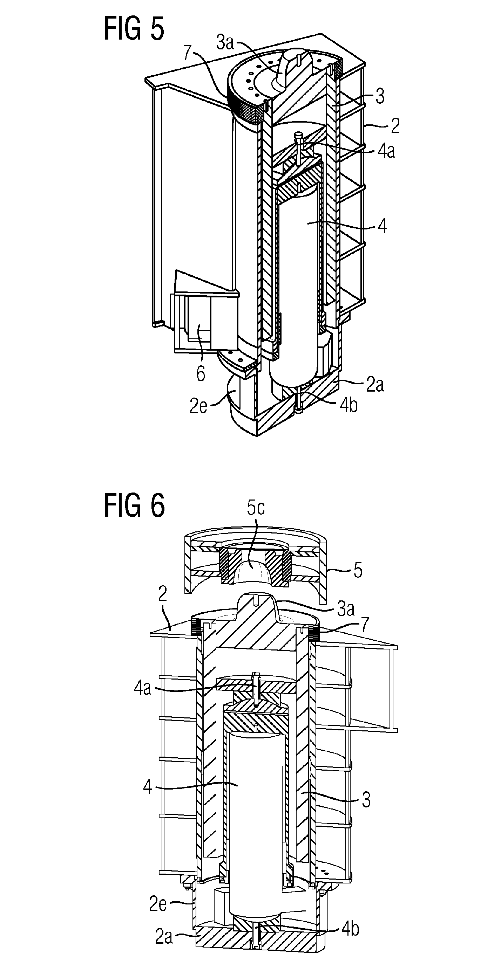

FIG 5 und FIG 6 zeigen das Führungsgehäuse 2 und den Hebezapfen 3 gemäß FIG 4 im Längsschnitt. In diesen Darstellungen ist auch der Hubzylinder 4 erkennbar. Das Innere des Hebezapfens 3 und die Verbindung des Hebezapfens 3 mit dem Hubzylinder 4 sind im Detail erkennbar. Gleiche Bezugszeichen wie in FIG 1 kennzeichnen gleiche Elemente.

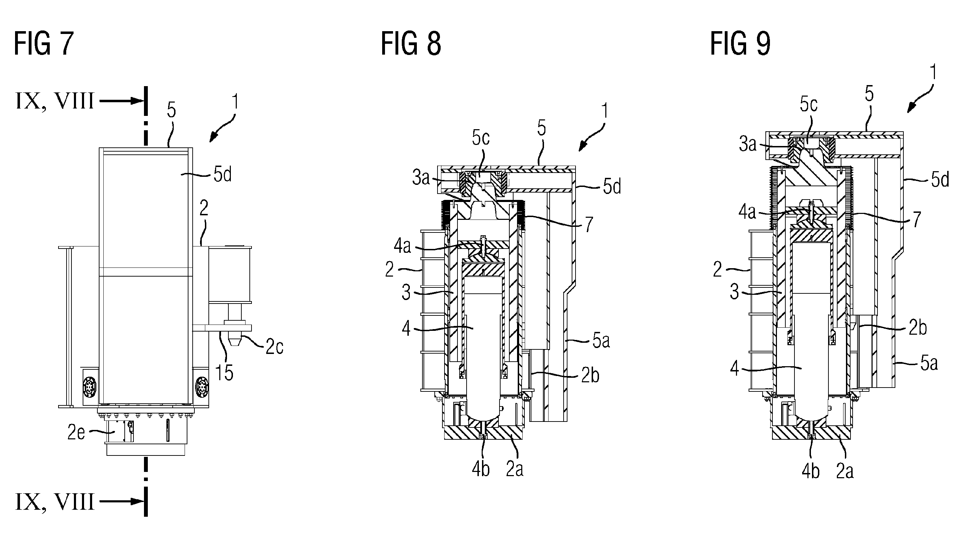

FIG 7 zeigt die Hub- und Schwenkvorrichtung 1 mit dem Führungsgehäuse 2 und dem Führungsgerüst 5 in der Seitenansicht mit Blickrichtung auf den Stützarm 5a.

FIG 8 zeigt den Schnitt VIII-VIII gemäß FIG 7, wobei der Hubzylinder 4 sich in einer Stellung befindet, bei der der Deckel 11 auf dem Ofengefäß 10 liegt (siehe FIG 15 bis 19).

FIG 9 zeigt den Schnitt IX-IX gemäß FIG 7, wobei der Hubzylinder 4 sich in einer Stellung befindet, bei der der Deckel 11 vom Ofengefäß 10 abgehoben ist (siehe FIG 15 bis 19). In dieser Darstellung ist erkennbar, dass die Dichtungseinrichtung 7 auch bei ausgefahrenem Hebezapfen 3 eine dichte Verbindung zwischen dem Hebezapfen 3 und dem Führungsgehäuse 2 herstellt, nachdem die Dichtungseinrichtung 7 längenveränderlich ausgebildet ist.

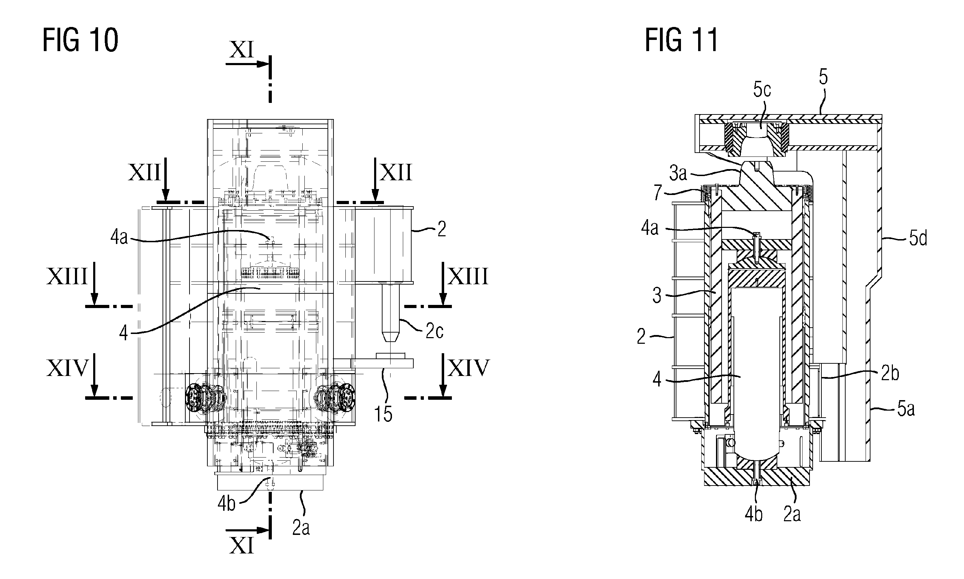

FIG 10 zeigt eine weitere Seitenansicht der Hub- und Schwenkvorrichtung 1, bei der der Zentrierzapfen 2c aus der Zentrieröffnung 6c der Aufnahmeanordnung 15 ausgefahren ist. Der Deckel 11 liegt in dieser Position auf dem Ofengefäß 10 auf.

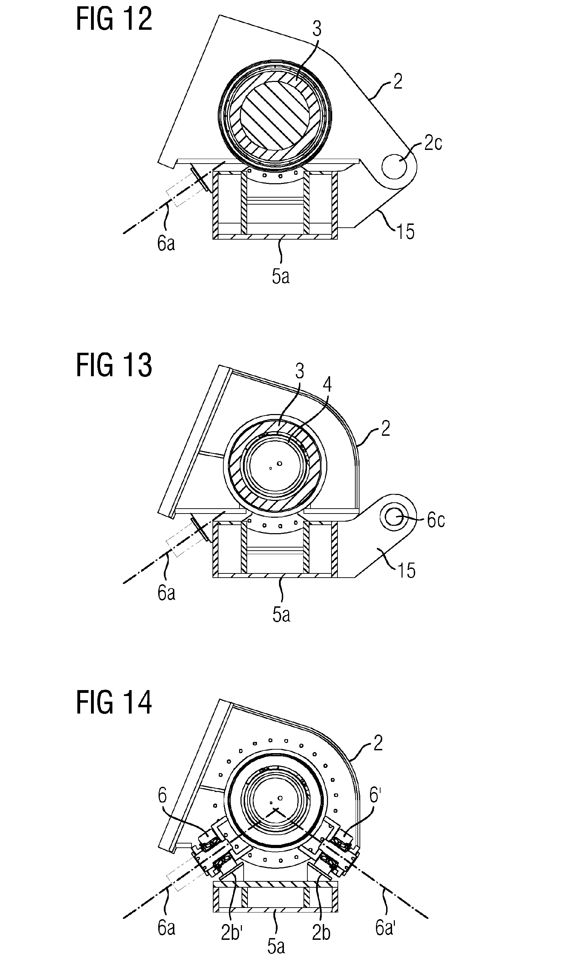

FIG 11 zeigt die Hub- und Schwenkvorrichtung 1 gemäß FIG 10 in einer weiteren Seitenansicht im Längsschnitt. FIG 12 zeigt den Schnitt XII-XII gemäß FIG 10, FIG 13 zeigt den Schnitt XIII-XIII gemäß FIG 10 und FIG 14 zeigt den Schnitt XIV-XIV gemäß FIG 10.

Die FIGen 15 und 16 zeigen nun in der Draufsicht eine Ofenanlage 100, wobei FIG 15 die Ofenanlage 100 in der Betriebsposition und FIG 16 die Ofenanlage 100 in einer Chargierposition zeigen. Die Ofenanlage 100 umfasst eine Hub- und Schwenkvorrichtung gemäß der Erfindung, umfassend ein Führungsgehäuse 2, einen Hebezapfen 3, einen in dieser Darstellung nicht sichtbaren Hubzylinder 4 und ein Führungsgerüst 5. Weiterhin sind Elektrodentragarme 8a, 8b, 8c vorhanden, welche gegenüber dem Führungsgehäuse 2 anheb- und absenkbar sind. Die Elektrodentragarme 8a, 8b, 8c sind mit Elektroden 9 verbunden, welche durch den Deckel 11 geführt sind. Der Deckel 11 deckt einen Ofenraum 10a in einem Ofengefäß 10 ab, wobei das Ofengefäß 10 eine Absticheinrichtung 13 umfasst.

Am Deckel 11 befindet sich ein Anschluss 12 zur Abgasabführung aus dem Ofenraum 10a. Um den Deckel 11 aus der Betriebsposition gemäß FIG 15 in eine Chargierposition gemäß FIG 16 zu überführen, erfolgt ein Anheben des Hebezapfens 3 mittels des Hubzylinders 4, wobei der Hebezapfen 3 an seinem dem Hubzylinder 4 abgewandten Ende 3a in die Hebeöse 5c eingreift. Dadurch wird das Führungsgerüst 5 samt Deckel 11 angehoben, wobei die Gleitrollen 6, 6' auf den Gleitplatten 2b, 2b' abrollen. Nun wird das Führungsgehäuse 2 inklusive des Führungsgerüsts 5 und des Deckels 11 um eine vertikale Rotationsachse von der Betriebsposition in die Chargierposition überführt, in der der Deckel 11 das Ofengefäß 10 bzw. den Ofenraum 10a freigibt.

Es erfolgt nun ein Chargieren von einzuschmelzendem Einsatzstoff 14 in das Ofengefäß 10, wobei es sich bei dem Einsatzstoff 14 insbesondere um Schrott handelt. Nun wird das Führungsgehäuse 2 inklusive des Führungsgerüsts 5 und des Deckels 11 um die vertikale Rotationsachse von der Chargierposition zurück in die Betriebsposition geschwenkt. Anschließend erfolgt ein Absenken des Hebezapfens 3 mittels des Hubzylinders 4, wobei das Führungsgerüst 2 samt Deckel 11 abgesenkt wird und die Gleitrollen 6, 6' auf den Gleitplatten 2b, 2b' abrollen. Der Deckel 11 der Ofenanlage 100 befindet sich nun wieder in Betriebsposition, wie in FIG 15 dargestellt.

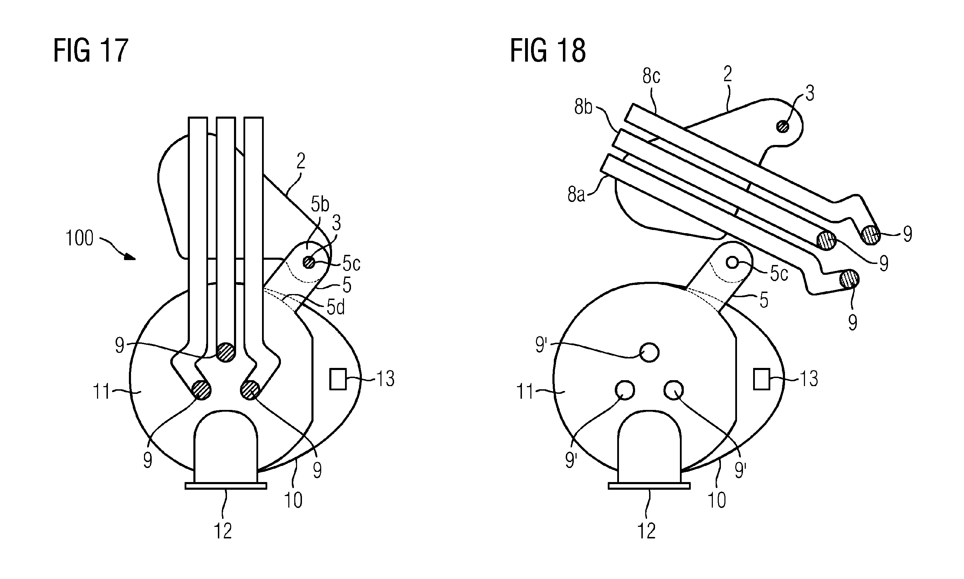

FIGen 17 und 18 zeigen nun, wie eine Wartung der Ofenanlage 100 durchgeführt werden kann. FIG 15 und FIG 17 sind dabei identisch und zeigen die Betriebsposition des Deckels 11 sowie der Elektrodentragarme 8a, 8b, 8c mit den Elektroden 9. Um die Ofenanlage 100 zu warten, wird nun der Hebezapfen 3 mittels des Hubzylinders 4 abgesenkt, wobei der Deckel 11 auf dem Ofengefäß 10 verbleibt. Der Hebezapfen 3 gleitet an seinem dem Hubzylinder 4 abgewandten Ende 3a aus der Hebeöse heraus. Gleichzeitig gleitet der Zentrierzapfen 2c aus der Zentrieröffnung 6c und die beiden Gleitrollen 6, 6' werden auf den Gleitplatten 2b, 2b' abgerollt. Es erfolgt nun ein Verschwenken des Führungsgehäuses 2 inklusive der zuvor über mindestens einen weiteren, hier nicht dargestellten Hubzylinder angehoben Elektrodentragarme 8a, 8b, 8c inklusive der Elektroden 9 in eine Wartungsposition gemäß FIG 18. Im Deckel 11 sind nun die Öffnungen 9' für die Elektroden 9 erkennbar.

In dieser Wartungsposition können nun Wartungsarbeiten an der Hub- und Schwenkvorrichtung 1 oder einem anderen Teil der Ofenanlage 100 durchgeführt werden, welche erst nach Ausschwenken des Führungsgehäuses 2 bzw. Trennen des Führungsgehäuses 2 vom Führungsgerüst 5 möglich ist. Anschließend erfolgt ein Rückschwenken des Führungsgehäuses 2 um die vertikale Rotationsachse von der Wartungsposition zurück in die Betriebsposition gemäß FIG 17. Nach Absenken der Elektrodentragarme 8a, 8b, 8c, wobei die Elektroden 9 über die Öffnungen 9' im Deckel 11 in das Ofengefäß 10 eingeführt werden, ist ein Einschmelzen des chargierten Einsatzstoffs 14 im Ofenraum 10a möglich.

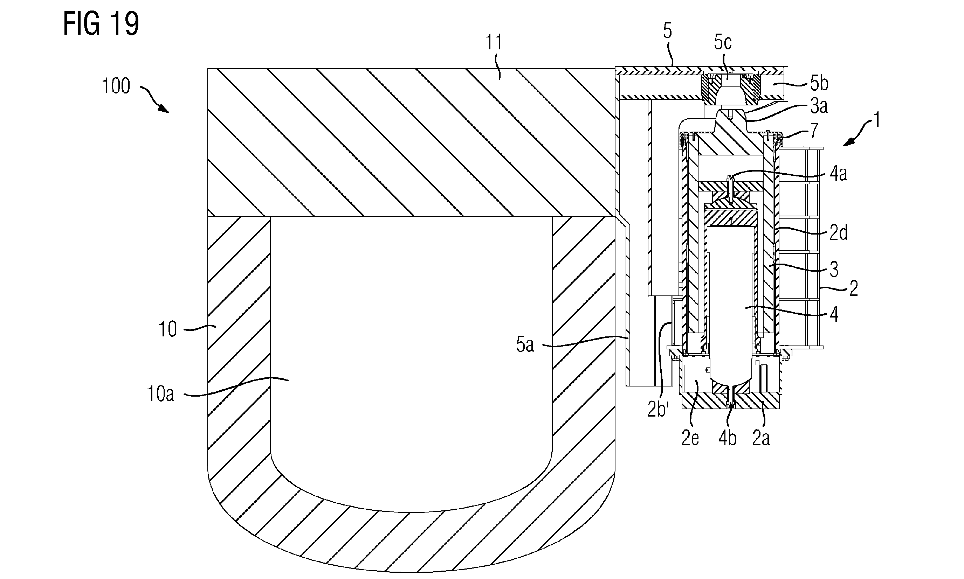

FIG 19 zeigt nun eine Seitenansicht einer Ofenanlage 100 umfassend einen Ofen mit einem Ofengefäß 10, in welchem sich ein Ofenraum 10a befindet, sowie einem Deckel 11, im Querschnitt. Die Ofenanlage 100 umfasst weiterhin eine Hub- und Schwenkvorrichtung 1, welche ebenfalls im Schnitt dargestellt ist. Gleiche Bezugszeichen der Hub- und Schwenkvorrichtung 1 wie in den Figuren 1 bis 14 kennzeichnen gleiche Elemente. Dabei zeigt FIG 19 die Ofenanlage 100 mit abgesenktem Deckel 11 bzw. verschlossenem Ofengefäß 10.

Selbstverständlich zeigen die Figuren 1 bis 19 lediglich Beispiele für die erfindungsgemäße Hub- und Schwenkvorrichtung sowie die damit ausgestattete Ofenanlage. Auch die erfindungsgemäßen Verfahren unter Verwendung der erfindungsgemäßen Hub- und Schwenkvorrichtung sind lediglich schematisch aufgezeigt. So kann ohne weiteres bei der erfindungsgemäßen Hub- und Schwenkvorrichtung die Anzahl an Gleitrollen und Gleitplatten, die Ausgestaltung des Endes des Hebezapfens und der damit korrespondierenden Hebeöse sowie die Ausgestaltung der Zentriereinrichtung verändert werden, ohne den Erfindungsgedanken zu verlassen. Weiterhin können die Bestandteile der Ofenanlage, wie das Ofengefäß, die Absticheinrichtung, der Deckel usw. verändert ausgeführt werden.

## Patentansprüche

1. Hub- und Schwenkvorrichtung (1) für einen Deckel (11) eines Ofens, insbesondere Lichtbogenofens, umfassend
- ein Führungsgehäuse (2) mit einer Grundplatte (2a), mindestens einer drehbar gelagerten Gleitrolle (6, 6') und einer senkrechten Öffnung (2d),
- einen innerhalb der senkrechten Öffnung (2d) im Führungsgehäuse (2) heb- und senkbaren Hebezapfen (3),
- einen Hubzylinder (4) zum Heben und Senken des Hebezapfens (3), der einerseits gelenkig mit dem Hebezapfen (3) und andererseits gelenkig und drehbar mit der Grundplatte (2a) verbunden ist, und
- ein Führungsgerüst (5) zum Tragen des Deckels (11), welches einen Stützarm (5a) aufweist, wobei ein oberes Ende des Stützarms (5a) zur Verbindung mit dem Deckel (11) eingerichtet ist und weiterhin eine Hebenase (5b) umfassend eine Hebeöse (5c) aufweist, die in Eingriff mit einem, dem Hubzylinder (4) abgewandten Ende des Hebezapfens (3) bringbar ist, wobei der Stützarm (5a) an seinem anderen Ende mindestens eine Gleitplatte (2b, 2b') aufweist, wobei eine Mantelfläche der mindestens einen Gleitrolle (6, 6') beim Heben und Senken des Hubzylinders (4) auf der mindestens einen Gleitplatte (2b, 2b') abrollbar ist.

2. Hub- und Schwenkvorrichtung nach Anspruch 1,
wobei die mindestens eine Gleitrolle (6, 6') mit einem automatischen Schmiermittelversorgungssystem verbunden ist.

3. Hub- und Schwenkvorrichtung nach Anspruch 1 oder Anspruch 2, wobei eine längenveränderliche Dichtungseinrichtung (7) einerseits am Führungsgehäuse (2) und andererseits an dem der Hebenase (5d) zugewandten Ende des Hebezapfens (3) befestigt ist, die beim Heben und Senken des Hubzylinders (4) den in Richtung der Hebenase (5b) aus dem Führungsgerüst (2) gehobenen Teil des Hebezapfens (3) radial umgibt.

4. Hub- und Schwenkvorrichtung nach Anspruch 3,
wobei die längenveränderliche Dichtungseinrichtung (7) durch eine schlauchförmige Faltenbalgdichtung gebildet ist.

5. Hub- und Schwenkvorrichtung nach einem der Ansprüche 1 bis 4, wobei die mindestens eine Gleitrolle (6, 6') um eine Gleitrollendrehachse (6a, 6a') drehbar ist, deren Position gegenüber dem Führungsgehäuse (2) verschiebbar ist.

6. Hub- und Schwenkvorrichtung nach einem der Ansprüche 1 bis 5, wobei das dem Hubzylinder (4) abgewandte Ende des Hebezapfens (3) sich verjüngend, insbesondere konisch oder halbkugelförmig, ausgebildet ist.

7. Hub- und Schwenkvorrichtung nach einem der Ansprüche 1 bis 6, wobei das Führungsgehäuse (2) zwei Gleitrollen (6, 6') und das Führungsgerüst (5) zwei Gleitplatten (2b, 2b') aufweist, wobei je eine Gleitrolle (6, 6') auf je einer Gleitplatte (2b, 2b') abrollbar ist.

8. Hub- und Schwenkvorrichtung nach Anspruch 7, wobei die Gleitrollendrehachsen (6a, 6a') in einer horizontalen Ebene liegen und V-förmig zueinander ausgerichtet sind, wobei eine Spitze des V, welche einem virtuellen Schnittpunkt der Gleitrollendrehachsen (6a, 6a') entspricht, vom Führungsgerüst (5) weg zeigt.

9. Hub- und Schwenkvorrichtung nach einem der Ansprüche 1 bis 8, wobei eine Zentriereinrichtung zur Positionierung des Führungsgerüsts (5) gegenüber dem Führungsgehäuse (2) bei angehobenen Hebezapfen (3) vorhanden ist.

10. Hub- und Schwenkvorrichtung nach einem der Ansprüche 1 bis 9, wobei mindestens ein gegenüber dem Führungsgehäuse (2) heb- und senkbarer Elektrodentragarm (8a, 8b, 8c) mit dem Führungsgehäuse (2) verbunden ist.

11. Ofenanlage (100), insbesondere Lichtbogenofenanlage, umfassend einen Ofen mit einem Ofengefäß (10) und einem Deckel (11) für das Ofengefäß (10), und eine mit dem Deckel (11) verbundene Hub- und Schwenkvorrichtung (1) nach einem der Ansprüche 1 bis 10, wobei der Deckel (11) am oberen Ende des Führungsgerüsts (5) gegenüber der Hebenase (5b) am Stützarm (5a) befestigt ist und das Führungsgehäuse (2) um eine vertikale Rotationsachse gegenüber dem Ofengefäß (10) verschwenkbar angeordnet ist.

12. Verfahren zum Chargieren einer Ofenanlage (100) nach Anspruch 11, insbesondere Lichtbogenofenanlage, mit folgenden Schritten:
- Heben des Hebezapfens (3) mittels des Hubzylinders (4), wobei der Hebezapfen (3) an seinem dem Hubzylinder (4) abgewandten Ende in die Hebeöse (5c) eingreift, das Führungsgerüst (5) samt Deckel (11) angehoben wird und die mindestens eine Gleitplatte (2b, 2b') auf der mindestens einen Gleitrolle (6, 6') nach oben bewegt wird,
- Verschwenken des Führungsgehäuses (2) inklusive des Führungsgerüsts (5) und des Deckels (11) um die vertikale Rotationsachse von einer Betriebsposition, in der das Ofengefäß (10) mit dem Deckel (11) verschlossen ist, in eine Chargierposition, in der der Deckel (11) das Ofengefäß (10) freigibt,
- Chargieren des Ofengefäßes (10) mit einzuschmelzendem Einsatzstoff (14), insbesondere Schrott,
- Verschwenken des Führungsgehäuses (2) inklusive des Führungsgerüsts (5) und des Deckels (11) um die vertikale Rotationsachse von der Chargierposition zurück in die Betriebsposition und
- Absenken des Hebezapfens (3) mittels des Hubzylinders (4), wobei das Führungsgerüst (2) samt Deckel (11) abgesenkt wird und die mindestens eine Gleitplatte (2b, 2b') auf der mindestens einen Gleitrolle (6, 6') nach unten bewegt wird.

13. Verfahren zum Warten einer Ofenanlage (100) nach Anspruch 9, insbesondere Lichtbogenofenanlage, mit folgenden Schritten:
- Senken des Hebezapfens (3) mittels des Hubzylinders (4) in einer Betriebsposition, in der das Ofengefäß (10) mit dem Deckel (11) verschlossen ist, wobei der Hebezapfen (3) an seinem dem Hubzylinder (4) abgewandten Ende aus der Hebeöse (5c) heraus gleitet und die mindestens eine Gleitplatte (2b, 2b') auf der mindestens einen Gleitrolle (6, 6') nach unten bewegt wird,
- Verschwenken des Führungsgehäuses (2) um die vertikale Rotationsachse von der Betriebsposition in eine Wartungsposition, wobei der Deckel (11) auf dem Ofengefäß (10) verbleibt,
- Warten der Hub- und Schwenkvorrichtung (1) und/oder eines anderen Teils der Ofenanlage (100), und
- Verschwenken des Führungsgehäuses (2) um die vertikale Rotationsachse von der Wartungsposition zurück in die Betriebsposition.

14. Verfahren nach Anspruch 12 oder Anspruch 13,
wobei vor dem Verschwenken des Führungsgerüsts (2) um die vertikale Rotationsachse von der Betriebsposition in die Chargierposition oder Wartungsposition der mindestens eine Elektrodentragarm (8a, 8b, 8c) gegenüber dem Führungsgehäuse (2) und dem Deckel (11) angehoben wird und nach Verschwenken des Führungsgehäuses (2) um die vertikale Rotationsachse von der Chargierposition oder Wartungsposition zurück in die Betriebsposition der mindestens eine Elektrodentragarm (8a, 8b, 8c) gegenüber dem Führungsgehäuse (2) und dem Deckel (11) abgesenkt wird.

## Claims

1. Lift and pivot device (1) for a cover (11) of a furnace, in particular an electric arc furnace, comprising
- a guide housing (2) having a base plate (2a), at least one rotatably mounted slide roller (6, 6') and a vertical opening (2d),
- a lift pin (3) which can be lifted and lowered inside the vertical opening (2d) in the guide housing (2),
- a lift cylinder (4) for lifting and lowering the lift pin (3), which lift cylinder (4) is connected at one end in articulated fashion to the lift pin (3) and at the other end in articulated fashion and rotatably to the base plate (2a), and
- a guide frame (5) for carrying the cover (11), which guide frame (5) comprises a support arm (5a), wherein an upper end of the support arm (5a) is equipped for connection to the cover (11) and furthermore comprising a lift nose (5b) having a lift eye (5c) which can be engaged with an end of the lift pin (3) facing away from the lift cylinder (4), wherein the support arm (5a) has at its other end at least one slide plate (2b, 2b'), wherein a lateral face of the at least one slide roller (6, 6') can roll on the at least one slide plate (2b, 2b') during the lifting and lowering of the lift cylinder (4).

2. Lift and pivot device according to claim 1, wherein the at least one slide roller (6, 6') is connected to an automatic lubricant supply system.

3. Lift and pivot device according to claim 1 or claim 2, wherein a sealing device (7) of variable length is fastened at one end on the guide housing (2) and at the other end on the end of the lift pin (3) facing the lift nose (5d), which sealing device (7) radially surrounds the part of the lift pin (3) raised in the direction of the lift nose (5b) from the guide frame (2) during the lifting and lowering of the lift cylinder (4).

4. Lift and pivot device according to claim 3, wherein the sealing device (7) of variable length is formed by a tubular bellows seal.

5. Lift and pivot device according to one of claims 1 to 4, wherein the at least one slide roller (6, 6') is rotatable around a slide roller axis of rotation (6a, 6a'), the position of which can be adjusted with respect to the guide housing (2) .

6. Lift and pivot device according to one of claims 1 to 5, wherein the end of the lift pin (3) facing away from the lift cylinder (4) is designed as tapering, in particular conical or hemispherical.

7. Lift and pivot device according to one of claims 1 to 6, wherein the guide housing (2) has two slide rollers (6, 6') and the guide frame (5) has two slide plates (2b, 2b'), wherein in each case one slide roller (6, 6') can roll on one slide plate (2b, 2b').

8. Lift and pivot device according to claim 7, wherein the slide roller axes of rotation (6a, 6a') lie in a horizontal plane and are oriented in a V-shape with respect to one another, wherein a tip of the V, which corresponds to a virtual point of intersection of the slide roller axes of rotation (6a, 6a'), points away from the guide frame (5).

9. Lift and pivot device according to one of claims 1 to 8, wherein a centring device for positioning the guide frame (5) with respect to the guide housing (2) when the lift pin (3) has been lifted is present.

10. Lift and pivot device according to one of claims 1 to 9, wherein at least one electrode carrying arm (8a, 8b, 8c) which is liftable and pivotable with respect to the guide housing (2) is connected to the guide housing (2).

11. Furnace system (100), in particular an electric arc furnace system, comprising a furnace having a furnace vessel (10) and a cover (11) for the furnace vessel (10), and a lift and pivot device (1) according to one of claims 1 to 10 connected to the cover (11), wherein the cover (11) is fastened on the upper end of the guide frame (5) with respect to the lift nose (5b) on the support arm (5a) and the guide housing (2) is arranged pivotably around a vertical axis of rotation with respect to the furnace vessel (10).

12. Method for charging a furnace system (100) according to claim 11, in particular an electric arc furnace system, having the following steps:
- lifting the lift pin (3) by means of the lift cylinder (4), wherein the end of the lift pin (3) facing away from the lift cylinder (4) engages with the lift eye (5c), the guide frame (5) together with cover (11) is lifted and the at least one slide plate (2b, 2b') is moved upward on the at least one slide roller (6, 6'),
- pivoting the guide housing (2) including the guide frame (5) and the cover (11) around the vertical axis of rotation from an operating position in which the furnace vessel (10) is closed by the cover (11) into a charging position in which the cover (11) uncovers the furnace vessel (10),
- charging the furnace vessel (10) with charge material (14) to be melted, in particular scrap metal,
- pivoting the guide housing (2) including the guide frame (5) and the cover (11) around the vertical axis of rotation from the charging position back into the operating position and
- lowering the lift pin (3) by means of the lift cylinder (4), wherein the guide frame (2) together with cover (11) is lowered and the at least one slide plate (2b, 2b') is moved downward on the at least one slide roller (6, 6').

13. Method for servicing a furnace system (100) according to claim 9, in particular an electric arc furnace system, having the following steps:
- lowering the lift pin (3) by means of the lift cylinder (4) in an operating position in which the furnace vessel (10) is closed by the cover (11), wherein the end of the lift pin (3) facing away from the lift cylinder (4) slides out of the lift eye (5c) and the at least one slide plate (2b, 2b') is moved downward on the at least one slide roller (6, 6')
- pivoting the guide housing (2) around the vertical axis of rotation from the operating position into a servicing position, wherein the cover (11) remains on the furnace vessel (10),
- servicing the lift and pivot device (1) and/or another part of the furnace system (100), and
- pivoting the guide housing (2) around the vertical axis of rotation from the servicing position back into the operating position.

14. Method according to claim 12 or claim 13, wherein prior to the pivoting of the guide frame (2) around the vertical axis of rotation from the operating position into the charging position or servicing position the at least one electrode carrying arm (8a, 8b, 8c) is lifted with respect to the guide housing (2) and the cover (11), and after the pivoting of the guide housing (2) around the vertical axis of rotation from the charging position or servicing position back into the operating position the at least one electrode carrying arm (8a, 8b, 8c) is lowered with respect to the guide housing (2) and the cover (11).

## Revendications

1. Dispositif ( 1 ) de levage et de pivotement d'un couvercle ( 11 ) d'un four, notamment d'un four à arc électrique, comprenant
- une enveloppe ( 2 ) de guidage ayant une embase ( 2a ) , au moins un galet ( 6, 6' ) monté tournant et une ouverture ( 2d ) verticale,
- un tourillon de levage pouvant être levé et abaissé à l'intérieur de l'ouverture ( 2d ) verticale de l'enveloppe ( 2 ) de guidage,
- un vérin ( 4 ) de levage pour lever et abaisser le tourillon ( 3 ) de levage qui, d'une part, est articulé au tourillon ( 3 ) de levage et, d'autre part, est articulé à l'embase ( 2 ) et peut tourner avec elle, et
- un échafaudage ( 5 ) de guidage pour porter le couvercle ( 11 ), qui a un bras ( 5a ) d'appui, une extrémité supérieure du bras ( 5a ) d'appui étant agencée pour se lier au couvercle ( 11 ) et ayant en outre un bec ( 5b ) de levage comprenant un sillet ( 5c ) de levage, qui peut être mis en prise avec une extrémité, éloignée du vérin ( 4 ), du tourillon ( 3 ) de levage, le bras ( 5a ) d'appui ayant à son autre extrémité au moins une plaque ( 2b, 2b' ) de glissement, une surface latérale du au moins un galet ( 6, 6' ) pouvant, lorsque le vérin ( 4 ) de levage s'élève et s'abaisse, roulé sur la au moins une plaque ( 2b, 2b' ) de glissement.

2. Dispositif de levage et de pivotement suivant la revendication 1,
dans lequel le au moins un galet ( 6, 6' ) est relié à un système automatique d'alimentation en lubrifiant.

3. Dispositif de levage et de pivotement suivant la revendication 1 ou la revendication 2, dans lequel un dispositif ( 7 ) d'étanchéité pouvant se modifier en longueur est fixé, d'une part, à l'enveloppe ( 2 ) de guidage et, d'autre part, à l'extrémité, tournée vers le bec ( 5d ) de levage, du tourillon ( 3 ) de levage, dispositif qui, lorsque le vérin ( 4 ) de levage est levé et est abaissé, entoure radialement la partie du tourillon ( 3 ) de levage levée dans la direction du bec ( 5b ) de levage de l'échafaudage ( 2 ) de guidage.

4. Dispositif de levage et de pivotement suivant la revendication 3,
dans lequel le dispositif ( 7 ) d'étanchéité pouvant se modifier en longueur est formé par une étanchéité à soufflet en forme de gaine.

5. Dispositif de levage et de pivotement suivant l'une des revendications 1 à 4, dans lequel le au moins un galet ( 6, 6' ) peut tourner autour d'un axe ( 6a,, 6a' ) de rotation du galet, dont la position peut être déplacée par rapport à l'enveloppe ( 2 ) de guidage.

6. Dispositif de levage et de pivotement suivant l'une des revendications 1 à 5, dans lequel l'extrémité, éloignée du vérin ( 4 ) de levage, du tourillon ( 3 ) de levage se rétrécie, notamment coniquement ou en forme d'hémisphère.

7. Dispositif de levage et de pivotement suivant l'une des revendications 1 à 6, dans lequel l'enveloppe ( 2 ) de guidage a deux galets ( 6, 6' ) et l'échafaudage ( 5 ) de guidage deux plaques ( 2, 2b' ) de glissement, respectivement un galet ( 6, 6' ) pouvant rouler sur respectivement une plaque ( 2b, 2b' ) de glissement.

8. Dispositif de levage et de pivotement suivant la revendication 7, dans lequel les axes ( 6a, 6a' ) de rotation des galets sont dans un plan horizontal et forment l'un avec l'autre un V, une pointe du V, qui correspond à un point d'intersection virtuel des axes ( 6a, 6a' ) de rotation des galets, s'éloignant de l'échafaudage ( 5 ) de guidage.

9. Dispositif de levage et de pivotement suivant l'une des revendications 1 à 8, dans lequel il y a un dispositif de centrage pour mettre en position l'échafaudage ( 5 ) de guidage par rapport à l'enveloppe ( 2 ) de guidage lorsque le tourillon ( 8 ) de levage est levé.

10. Dispositif de levage et de pivotement suivant l'une des revendications 1 à 9, dans lequel au moins un bras ( 8a, 8b, 8c ) de support d'électrode pouvant être levé et abaissé par rapport à l'enveloppe ( 2 ) de guidage, est relié à l'enveloppe ( 2 ) de guidage.

11. Installation ( 100 ) de four, notamment installation de fours à arc électrique, comprenant un four ayant une carcasse ( 10 ) de four et un couvercle ( 11 ) de la carcasse ( 10 ) de four et un dispositif ( 1 ) de levage et de pivotement relié au couvercle ( 11 ) suivant l'une des revendications 1 à 10, dans laquelle le couvercle ( 11 ) est, à l'extrémité supérieure de l'échafaudage ( 5 ) de guidage, fixé au bras ( 5a ) d'appui en face du bec ( 5b ) de levage et l'enveloppe ( 2 ) de guidage est montée pivotante par rapport à la carcasse ( 10 ) de four autour d'un axe de rotation vertical.

12. Procédé pour charger une installation ( 100 ) de four suivant la revendication 11, notamment une installation de four à arc électrique, ayant les stades suivants :
- levage du tourillon ( 3 ) de levage au moyen du vérin ( 4 ) de levage, le tourillon ( 3 ) de levage pénétrant, à son extrémité éloignée du vérin ( 4 ) de levage, dans l'oeillet ( 5c ) de levage, l'échafaudage ( 5 ) de guidage étant ensemble avec le couvercle ( 11 ) soulevé et la au moins une plaque ( 2b, 2b' ) de glissement étant déplacée vers le haut sur le au moins un galet ( 6, 6' ),
- pivotement de l'enveloppe ( 2 ) de guidage y compris l'échafaudage ( 5 ) de guidage et le couvercle ( 11 ) autour de l'axe de rotation vertical d'une position de fonctionnement dans laquelle la carcasse ( 10 ) du four est fermée par le couvercle ( 11 ) à une position de chargement dans laquelle le couvercle ( 11 ) dégage la carcasse ( 10 ) du four,
- chargement de la carcasse ( 10 ) du four par de la matière ( 14 ) de charge à fondre, notamment par de la mitraille,
- basculement de l'enveloppe ( 2 ) de guidage y compris l'échafaudage ( 5 ) de guidage et le couvercle ( 11 ) autour de l'axe de rotation vertical de la position de chargement en retour à la position de fonctionnement et
- abaissement du tourillon ( 3 ) de levage au moyen du vérin ( 4 ) de levage, l'échafaudage ( 2 ) de guidage étant ensemble avec le couvercle ( 11 ) abaissé et la au moins une plaque ( 2b, 2b' ) de glissement étant déplacée vers le bas sur le au moins un galet ( 6, 6' ).

13. Procédé d'entretien d'une installation ( 100 ) de four suivant la revendication 9, notamment, d'une installation à arc électrique, ayant les stades suivants :
- abaissement du tourillon ( 3 ) de levage au moyen du vérin ( 4 ) de levage dans une position de fonctionnement dans laquelle la carcasse ( 10 ) du four est fermée par le couvercle ( 11 ), le tourillon ( 3 ) de levage glissant à son extrémité éloignée du vérin ( 4 ) de levage hors de l'oeillet ( 5c ) de levage et la au moins une plaque ( 2b, 2b' ) de glissement étant déplacée vers le bas sur le au moins un galet ( 6, 6 ),
- basculement de l'enveloppe ( 2 ) de guidage autour de l'axe de rotation vertical de la position de fonctionnement en une position d'entretien, le couvercle ( 11 ) restant sur la carcasse ( 10 ) du four,
- entretien du dispositif ( 1 ) de levage et de pivotement et/ou d'une autre partie de l'installation ( 100 ) de four et
- basculement de l'enveloppe ( 2 ) de guidage autour de l'axe de rotation vertical de la position d'entretien en retour à la position de fonctionnement.

14. Procédé suivant la revendication 12 ou la revendication 13, dans lequel, avant le basculement de l'échafaudage ( 2 ) de guidage autour de l'axe de rotation vertical de la position de fonctionnement à la position de chargement ou à la position d'entretien, le au moins un bras ( 8a, 8b, 8c ) de support d'électrode est soulevé par rapport à l'enveloppe ( 2 ) de guidage et au couvercle ( 11 ) et, après le basculement de l'enveloppe ( 12 ) de guidage autour de l'axe de rotation vertical de la position de chargement ou de la position d'entretien en retour à la position de fonctionnement, le au moins un bras ( 8a, 8b, 8c ) de support d'électrode est abaissé par rapport à l'enveloppe ( 2 ) de guidage et au couvercle ( 11 ).
